# EUROPEAN PATENT APPLICATION

(11) **EP 2 323 369 A1**
(43) Date of publication of application: **18.05.2011**
(21) Application number: 09830107.0
(22) Date of filing: 10.03.2009
(51) Int. Cl.: H04N 1/10, G06K 9/20, G06T 1/00, H04N 1/04, H04N 1/107

(54) **FORM READING DEVICE AND FORM DETECTING METHOD**

(30) Priority: 05.12.2008 JP 2008310653
(71) Applicant: Panasonic Corporation, Kadoma-shi Osaka 571-8501 (JP)
(72) Inventor: FUKUI, Kazuaki, Chuo-ku Osaka-shi Osaka 540-6207 (JP); SAITOH, Kazuki, Chuo-ku Osaka-shi Osaka 540-6207 (JP); KINOSHITA, Hidetoshi, Chuo-ku Osaka-shi Osaka 540-6207 (JP)
(74) Representative: Kügele, Bernhard
(86) International application number: PCT/JP2009/001076
(87) International publication number: WO 2010/064336

(57) **Abstract**

A document reading device (1) comprises: a camera (3) for taking an image of an information recorded surface of a passport (P) on which information that can be read through use of light of a predetermined reading wavelength is recorded; an illumination unit (4) for providing illumination of the reading wavelength toward the information recorded surface; an LED (8) for emitting detecting light for the passport (P) from a back of the information recorded surface, the detecting light being of a detecting wavelength different from the reading wavelength; and a control unit (9) for controlling document detection by the camera (3) and light emission by the LED (8). The document reading device (1) detects that the passport (P) is in place based on a brightness level of the detecting light from the LED (8) at the time of imaging. The detecting light emission from the LED (8) is controlled to turn off once the document is successfully detected. In this way, a document reading device of a simple construction capable of detecting a passport is provided.

## Description

### Technical Field

The present invention relates to a document reading device having a function of detecting that a document is in place.

### Background Art

Conventionally, a document reading device is known for reading a document such as a passport. For example, a document reading device for reading a passport is used at the immigration of an airport. Such a document reading device has a function of detecting that an object to be read (passport) is in place.

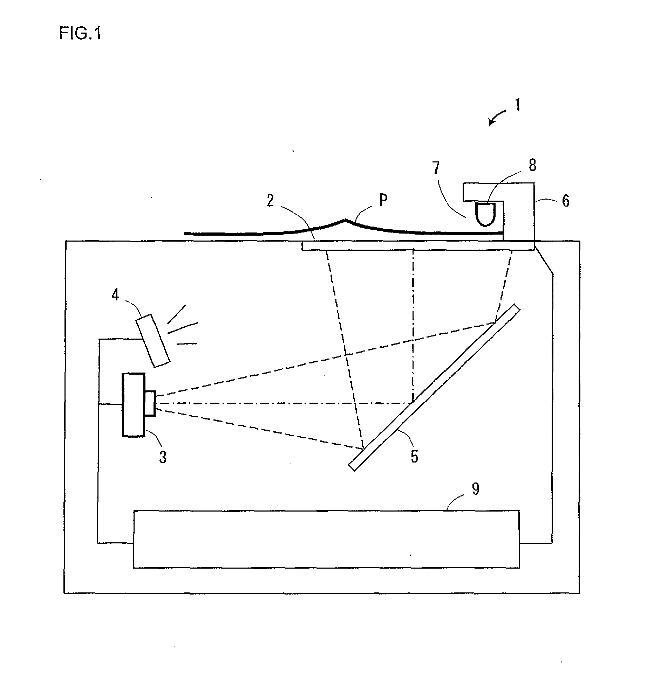

Conventionally, as a technique for detecting whether or not an object to be read is in place, there is a known method that uses a detection sensor. Such a method is disclosed in, for example, Japanese Patent Laid-Open No.2001-16406 (pp.5, Figure 1). According to this conventional method, data inputs from two photosensors (first and second photosensors) are used to detect whether or not an object to be read (original document) is placed on a platen by hand.

However, conventional methods require a special sensor (detection sensor) for detecting a document, which leads to a complex construction of the device.

### Disclosure of the Invention

### Problems to be Solved by the Invention

The present invention has been made under such circumstances. It is an object of the invention to provide a document reading device of a simple construction capable of detecting a document.

### Means for Solving the Problems

One aspect of the invention is a document reading device, and the document reading device comprises: an imaging unit for taking an image of an information recorded surface of a document on which information that can be read through use of light of a predetermined reading wavelength is recorded; an illumination unit for providing illumination of the reading wavelength toward the information recorded surface; a light emitting unit for emitting detecting light from a back of the information recorded surface onto a part of an area where the document should be present at the time of imaging, the detecting light being of a detecting wavelength different from the reading wavelength; a document detecting unit for detecting that the document is in place for imaging based on a brightness level of the detecting light on the image taken by the imaging unit; and a light emission control unit for controlling the light emitting unit to turn off the detecting light once the document is successfully detected.

Another aspect of the invention is a document detecting method, and the document detecting method comprises: emitting detecting light for a document from a back of an information recorded surface of the document on which information that can be read through use of light of a predetermined reading wavelength is recorded, the detecting light being of a detecting wavelength different from the reading wavelength; taking an image of the information recorded surface of the document by an imaging unit; detecting that the document is in place based on a brightness level of the detecting light on the image taken by the imaging unit; and turning off the detecting light once the document is successfully detected.

As described below, the present invention has other aspects. Therefore, the disclosure of the invention is intended to provide some of the aspects of the invention, and is not intended to limit the scope of the invention as described and claimed herein.

### Brief Description of the Drawings

Figure 1 is a diagram for illustrating a configuration of a document reading device according to an embodiment;
Figure 2 is a perspective view of the document reading device according to the embodiment;
Figure 3 is a block diagram showing a configuration of a control unit of the document reading device;
Figure 4 shows an example of a reading wavelength band (wavelength band of illumination) and a detecting wavelength band (wavelength band of an LED);
Figure 5 shows an example of an image taken by a camera (with the LED on); and
Figure 6 is a flow chart for illustrating an operational flow of the document reading device according to the embodiment.

### Description of Symbols

- 1: Document reading device
- 3: Camera
- 4: Illumination unit
- 8: LED
- 9: Control unit
- 10: Imaging control unit
- 11: Illumination control unit
- 12: LED control unit
- 13: Document detecting unit
- 15: Entire imaging area
- 16: Partial area
- 17: Detected area
- P: Passport

### Best Mode for Carrying Out the Invention

The present invention will now be described in detail. However, the detailed description below and attached drawings are not intended to limit the present invention. Rather, the scope of the invention is defined by the attached claims.

A document reading device according to the present invention comprises: an imaging unit for taking an image of an information recorded surface of a document on which information that can be read through use of light of a predetermined reading wavelength is recorded; an illumination unit for providing illumination of the reading wavelength toward the information recorded surface; a light emitting unit for emitting detecting light from a back of the information recorded surface onto a part of an area where the document should be present at the time of imaging, the detecting light being of a detecting wavelength different from the reading wavelength; a document detecting unit for detecting that the document is in place for imaging based on a brightness level of the detecting light on the image taken by the imaging unit; and a light emission control unit for controlling the light emitting unit to turn off the detecting light once the document is successfully detected.

With this configuration, a document such as a passport can be detected in a simple construction without any detection sensor. Meanwhile, a document such as a passport may carry information so as to allow certain information to be read through the use of a predetermined reading wavelength (for example, a near infrared and a near ultraviolet). Accordingly, several different reading wavelengths of illumination can be used to prevent information carried on the document from being altered. In this case, to detect a document, generally a wavelength of visible light is often used instead of light of a special wavelength because the visible light is easy to handle and an element device is easily available. When a document is placed on the document reading device, the detecting light is blocked by (and part of the light may be transmitted through) the document, and the reading illumination is then reflected on an information recorded surface. If the same wavelength of light is used for both the detecting light and the reading illumination, therefore, the detecting light may be affected by reflected reading illumination, which makes it difficult to measure the variation (decrease) in the brightness level of the detecting light. In addition, there may be cases where the detecting light passing through a thin document may make it difficult to distinguish details written on the document. In contrast, when the detecting light and the reading illumination have different wavelengths from each other, the effect of the reflected reading illumination can be reduced and the variation (decrease) in the level can easily be measured when the document blocks the detecting light. Further, in this case, the detecting light is turned off once the document is successfully detected. Therefore, when the information recorded surface is read, the effect of the detecting light can be eliminated so that the reading accuracy of the document can be improved.

Further, in the document reading device according to the invention, the wavelength of the detecting light may be set to a wavelength to which the imaging unit is more sensitive than to the wavelength of the reading illumination.

With this configuration, light of a wavelength to which the imaging unit is more sensitive (for example, visible light) than to light of the reading wavelength (for example, near infrared) is used to detect a document. Therefore, when a document is placed on the document reading device, the variation (decrease) in the brightness level of the detecting light caused by the document blocking the light becomes larger than the effect of the reading illumination reflected on the information recorded surface, which facilitates detection of whether or not the document is in place. Further, in this case, the detecting light is turned off once the document is successfully detected. Therefore, when the information recorded surface is read, the effect of the more detectable detecting light can be eliminated so that the reading accuracy of the document can be improved.

Further, in the document reading device according to the invention, the document detecting unit may detect that the document is in place based on a brightness level in a sub-range that corresponds to a location of the detecting light within an imaging area of the imaging unit.

With this configuration, since the document is detected based on the variation of the brightness level in a part (a sub-range that corresponds to a location of the detecting light) of the imaging area, the variation (decrease) in the brightness level of the detecting light can be accurately measured without being affected by external light in other imaging areas (than the sub-range).

Further, in the document reading device according to the invention, when the document is to be detected, the imaging unit may be controlled to take an image of a detected range that is a part of the entire imaging area and includes the sub-range.

With this configuration, since the imaging unit is controlled to take an image of a part of the entire imaging area (a detected range) when the document is to be detected, less time is required for processing than the case where an image is taken in the entire imaging area.

A document detecting method comprises: emitting detecting light from a back of an information recorded surface of a document on which information that can be read through use of light of a predetermined reading wavelength is recorded, the emitting detecting light using a detecting wavelength different from the reading wavelength; taking an image of the information recorded surface of the document by an imaging unit; detecting that the document is in place based on a brightness level of the detecting light on the image taken by the imaging unit; and turning off the detecting light once the document is successfully detected.

With this configuration, also in a similar way as described above, a document such as a passport can be detected in a simple construction without any detection sensor. In this case, since a wavelength of light (for example, visible light) different from the wavelength of the reading illumination is used to detect a document, it is easier to detect whether or not the document is in place than the case where the same wavelength of light is used. In other words, since the detecting light and the reading illumination have different wavelengths from each other, the effect of the reflected reading illumination can be reduced and the variation (decrease) in the brightness level of the detecting light can easily be measured. Further, in this case, the detecting light is turned off once the document is successfully detected. Therefore, when the information recorded surface is read, the effect of the detecting light can be eliminated so that the reading accuracy of the document can be improved.

Further, in the document detecting method according to the invention, the wavelength of the detecting light can be set to a wavelength to which the imaging unit is more sensitive than to the wavelength of the reading illumination.

According to the method, light of a wavelength to which the imaging unit is more sensitive (for example, visible light) than to light of the reading wavelength (for example, near infrared) is used to detect a document. Therefore, when a document is placed on the document reading device, the variation (decrease) in the brightness level of the detecting light caused by the document blocking the light becomes larger than the effect of the reading illumination reflected on the information recorded surface, which facilitates detection of whether or not the document is in place. Further, in this case, the detecting light is turned off once the document is successfully detected. Therefore, when the information recorded surface is read, the effect of the more detectable detecting light can be eliminated so that the reading accuracy of the document can be improved.

Further, in the document detecting method according to the invention, the state where the document is in place may be detected based on a brightness level in a sub-range that corresponds to a location of the detecting light within an imaging area of the imaging unit.

According to the method, since the document is detected based on the variation of the brightness level in a part (a sub-range that corresponds to a location of the detecting light) of the imaging area, the variation (decrease) in the brightness level of the detecting light can be accurately measured without being affected by external light in other imaging areas (than the sub-range).

According to the invention, since the document detecting unit for detecting that the document is in place based on a brightness level of the detecting light at the time when the image has been taken is provided, the document can be detected in a simple construction without any detection sensor.

A document reading device according to embodiments of the present invention will now be described below with reference to drawings. In this embodiment, a reading device for a passport used at the immigration of an airport is taken as an example. A document reading device according to the invention, however, is not limited thereto and may include a reading device for a boarding pass for a flight, a reading device for a passport used at a hotel front, a reading device for other identification cards, and the like.

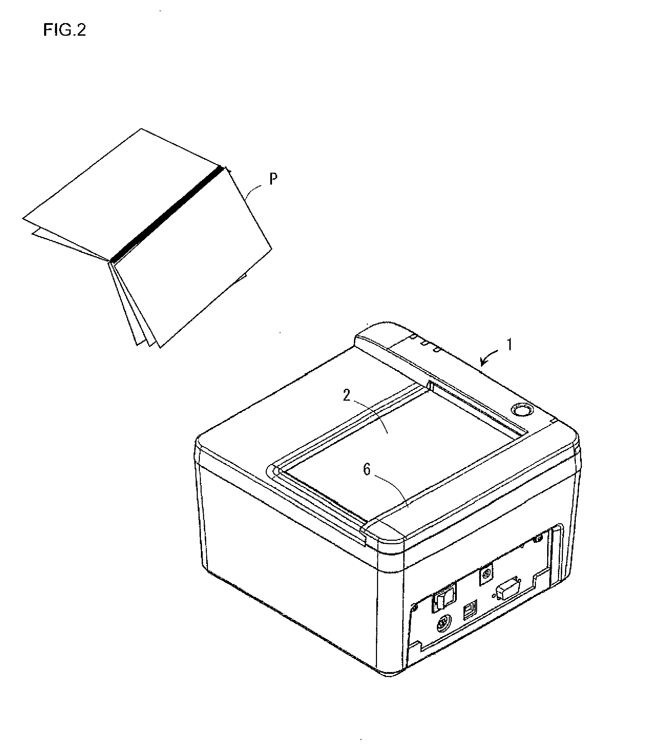

First, a configuration of a document reading device according to an embodiment will now be described as a whole below with reference to Figures 1 and 2. Figure 1 is a diagram for illustrating a configuration of a document reading device, and Figure 2 is a perspective view of the document reading device. As shown in Figures 1 and 2, a document reading device 1 has, on the top thereof, a reading surface 2 for placing a passport P. The passport P is placed on the reading surface 2 with a page open and down.

As shown in Figure 1, the document reading device 1 incorporates a camera 3 for optically reading written contents of the passport P placed on the reading surface 2, and an illumination unit 4 for illuminating the passport P placed on the reading surface 2 from underneath. The camera 3 is configured to take an image of the passport P illuminated by the illumination unit 4 from underneath through a transparent glass plate. In this case, the document reading device 1 is provided with a reflecting mirror 5 and the camera 3 takes an image of the passport P via the reflecting mirror 5. As described later, an information recorded surface (a bottom surface in Figure 1) of the passport P carries information written with a special ink that can be read when a reading wavelength band (infrared light area) is used. Therefore, the illumination unit 4 is configured to be able to radiate light in the reading wavelength band (infrared light) toward the information recorded surface. Here, the camera 3 corresponds to an imaging unit of the invention and the illumination unit 4 corresponds to an illumination unit of the invention.

The document reading device 1 has, on the top thereof, a guide unit 6 used in placing the passport P on the reading surface 2. As shown in Figure 1, the guide unit 6 is provided with a insertion recess 7 into which an edge of the placed passport P, and a ceiling face of the insertion recess 7 prevents the edge of the placed passport P from floating. The ceiling face of the insertion recess 7 is provided with an LED 8 for emitting light in order to detect the passport P. In this case, the LED 8 is provided at a location corresponding to the edge of the passport P. In other words, the LED 8 is arranged to illuminate the edge of the placed passport P from a back of a surface that carries written information and of which an image is taken by the camera 3. In many cases, the edge of the passport P has no written information (information is located in the center portion) and is suitably used in detecting the passport P. As described later, the LED 8 is configured to emit light in a detecting wavelength band (visible light) different from the reading wavelength band. Here, the LED 8 corresponds to a light emitting unit of the invention.

The document reading device 1 also incorporates a control unit 9 composed of a CPU, a microcomputer, or the like. The control unit 9 has a function of controlling the operation of the camera 3, the illumination unit 4, the LED 8, and the like. The control unit 9 will now be described in detail with reference to drawings.

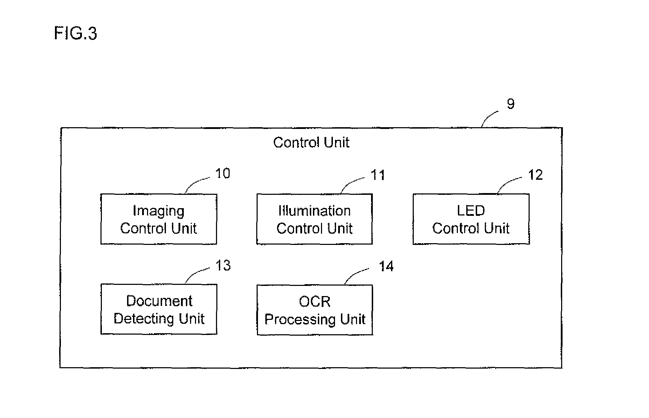

Figure 3 is a block diagram showing a configuration for realizing functions of the control unit 9. As shown in Figure 3, the control unit 9 comprises a imaging control unit 10 for controlling the operation (such as timing of imaging) of the camera 3, an illumination control unit 11 for controlling the operation (such as illumination timing) of the illumination unit 4, and an LED control unit 12 for controlling the operation (such as timing of light emission) of the LED 8. The control unit 9 also comprises a document detecting unit 13 for detecting that the passport P is placed on the reading surface 2 based on an image taken by the camera 3, and an optical character recognition processing unit 14 for performing optical character recognition (OCR) processing on the image of the information recorded surface taken by the camera 3.

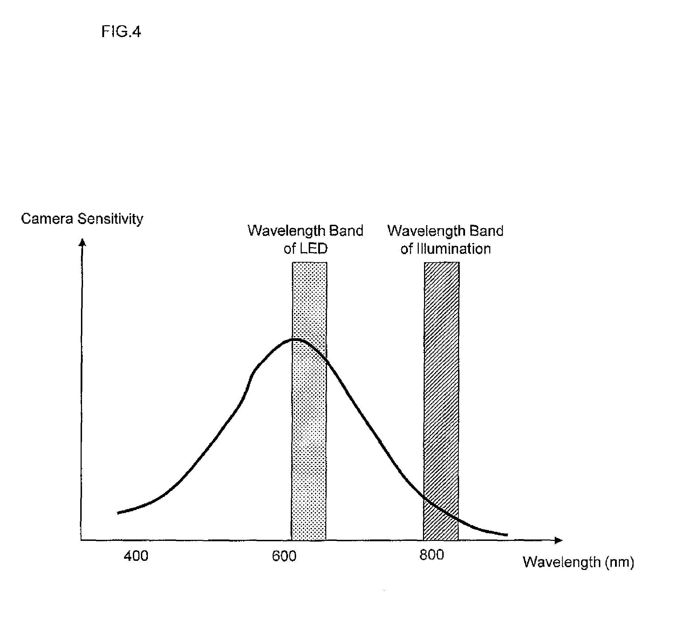

The wavelength used for illumination and the wavelength used for detection will now be described in detail with reference to Figure 4. Figure 4 shows an example of a reading wavelength band (wavelength band of illumination) and a detecting wavelength band (wavelength band of the LED 8). As shown in Figure 4, in this example, a near infrared area is used as the wavelength band of illumination and a visible light area is used as the wavelength band of the LED 8. In this case, the camera 3 is more sensitive to the light in the near infrared area than to the light in the visible light area. In other words, the detecting wavelength band of the LED 8 is set to a wavelength to which the camera 3 is more sensitive than to the wavelength band of the reading illumination.

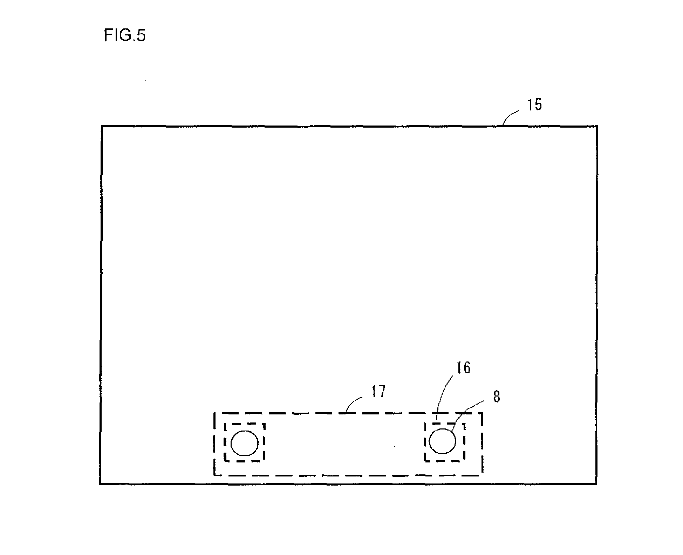

Next, an imaging area of the camera 3 and document detection processing will now be described in detail with reference to Figure 5. Figure 5 shows an example of an image taken by the camera 3 with the LED 8 on. As shown in Figure 5, the document detecting unit 13 is configured to measure the brightness level of a partial area 16 (sub-range) corresponding to the location of the LED 8 (edge) within the entire imaging area 15 of the camera 3, and if the brightness level of the partial area 16 is below a predetermined threshold, it is detected that the passport P is in place. When the document detecting unit 13 performs document detection processing, the camera 3 is controlled to take only an image of a detected area 17 (detected range) that is a part of the entire imaging area 15. For example, in a camera 3 with an imaging sensor such as CMOS, the imaging sensor can be electrically controlled to take an image of a part of the entire imaging area. As shown in Figure 5, the detected area 17 is arranged to include a partial area 16 used in the document detection processing. In the example shown in Figure 5, although a two-LED 8 case is shown, the number of LEDs 8 is not limited thereto.

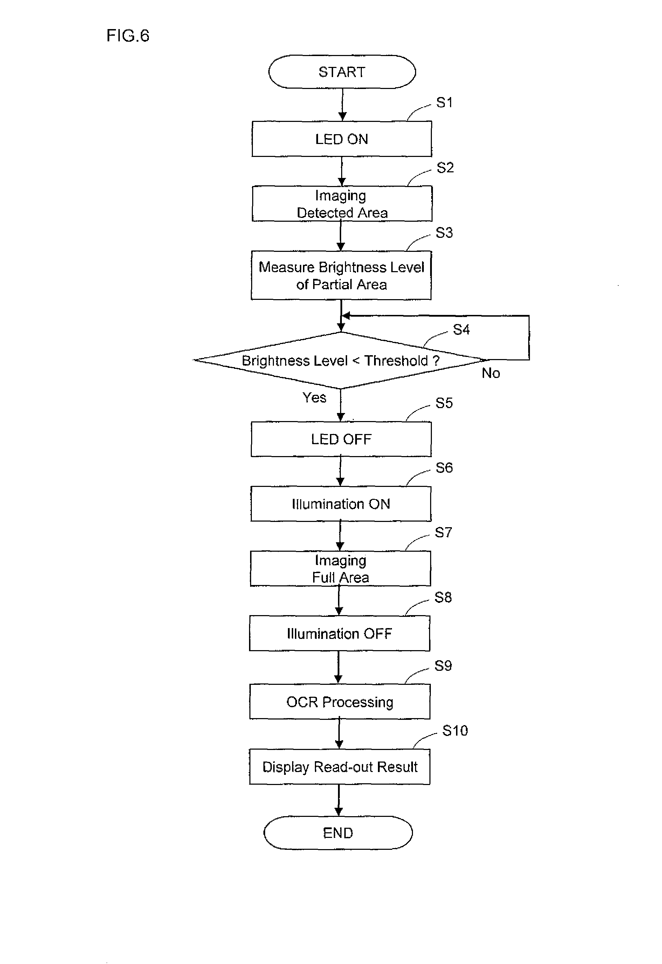

The operation of a thus configured document reading device 1 will be described with reference to a flow chart in Figure 6.

When the document reading device 1 is used to read the passport P, the detection LED 8 is first turned on (S1), and the camera 3 starts to take an image of the detected area 17 (S2). The document detecting unit 13 then measures the brightness level of the partial area 16 included in the detected area 17 (S3).

Once the passport P is placed on the reading surface 2 of the document reading device 1 with a page open and down, the document blocks light from the LED 8 so that the brightness level in the partial area 16 decreases below a predetermined threshold (S4). When detection processing for the passport P is finished (i.e. decrease in the brightness level is detected), the LED 8 is turned off (S5).

Next, the reading illumination unit 4 is turned on (S6), and the camera 3 takes an image of the entire imaging area 15 (full area) (S7). When imaging for the image of the information recorded surface of the passport P is finished, the illumination unit 4 is turned off (S8), and the taken image is subjected to the optical character recognition processing (S9). Information thus read from the passport P (a read result) is then displayed on a screen (not shown) (S10).

According to the document reading device 1 according to the embodiment of the invention, since the document detecting unit 13 for detecting that the passport P is in place based on the brightness level of the detecting light at the time when the image has been taken is provided, the passport P can be detected in a simple construction without any detection sensor.

The passport P may carry information so as to allow certain information to be read through the use of a predetermined reading wavelength (for example, a near infrared). Accordingly, the reading wavelength of illumination can be used to read information carried on the passport P. In this case, to detect the passport P, a wavelength of light (for example, visible light) different from the wavelength of the reading illumination is used. Therefore, it is easier to detect whether or not the passport P is in place than the case where the same wavelength of light is used. When the passport P is placed on the document reading device 1, the detecting light from the LED 8 is blocked by (and part of the light is transmitted through) the passport P, and the reading illumination is then reflected on an information recorded surface. If the same wavelength of light is used for both the detecting light from the LED 8 and the reading illumination, therefore, the light may be affected by reflected reading illumination, which makes it difficult to measure the variation (decrease) in the brightness level of the detecting light from the LED 8. In contrast, when the detecting light from the LED 8 and the reading illumination have different wavelengths from each other as in this embodiment, the effect of the reflected reading illumination can be reduced and the variation (decrease) in the brightness level of the detecting light from the LED 8 can easily be measured. Further, in this case, the detecting light from the LED 8 is turned off once the passport P is successfully detected. Therefore, when the information recorded surface is read, the effect of the detecting light from the LED 8 can be eliminated so that the reading accuracy of the passport P can be improved.

In this embodiment, light of a wavelength to which the camera 3 is more sensitive (for example, visible light) than to light of the reading wavelength (for example, near infrared) is used to detect the passport P. Therefore, when the passport P is placed on the document reading device 1, the variation (decrease) in the brightness level of the detecting light caused by the passport P blocking the light becomes larger than the effect of the reading illumination reflected on the information recorded surface, which facilitates detection of whether or not the passport P is in place. Further, in this case, the detecting light from the LED 8 is turned off once the passport P is successfully detected. Therefore, when the information recorded surface is read, the effect of the detecting light from the LED 8 to which the camera 3 is highly sensitive can be eliminated so that the reading accuracy of the passport P can be improved. Meanwhile, a wavelength filter may be disposed ahead of the imaging sensor at the time of detection and/or at the time of imaging. According to the arrangement of the invention, however, even such a filter may be eliminated.

In this embodiment, since the passport P is detected based on the variation of the brightness level in a part (partial area 16 corresponding to a location of the detecting light) of the imaging area of the camera 3, the variation (decrease) in the brightness level of the detecting light of the LED 8 can be accurately measured without being affected by external light in other imaging areas (than the partial area 16).

In this embodiment, since the imaging unit is controlled to take an image of a part of the entire imaging area 15 (a detected area 17) of the camera 3 when the passport P is to be detected, less time is required for processing than the case where an image is taken in the entire imaging area 15.

Embodiments according to the present invention have been described by way of illustration. The scope of the invention, however, is not limited thereto and alteration and modification can be made thereto without departing from the scope of the invention as defined by the appended claims.

Although description has been made above to an example of using a near infrared area as the reading wavelength bend (the wavelength band of illumination) and a visible light area as the detecting wavelength band (the wavelength band of the LED 8), the scope of the invention is not limited thereto. Any wavelength band may be used provided that the reading wavelength band and the detecting wavelength band are different from each other, and an ultraviolet area may be used as the detecting wavelength band, for example.

Although currently possible preferred embodiments of the invention have been described above, it is understood that various modifications can be made to the embodiments and it is intended that all such modifications that fall within the true spirit and scope of the invention are covered by the attached claims.

### Industrial Applicability

As described above, a document reading device according to the invention provides an advantage of being capable of detecting a document in a simple construction, and is useful for a passport reading device for reading a passport and the like, for example.

## Claims

1. A document reading device comprising:
an imaging unit which takes an image of an information recorded surface of a document on which information that can be read through use of light of a predetermined reading wavelength is recorded;
an illumination unit which provides illumination of the reading wavelength toward the information recorded surface;
a light emitting unit which emits detecting light from a back of the information recorded surface onto a part of an area where the document should be present at the time of imaging, the detecting light being of a detecting wavelength different from the reading wavelength;
a document detecting unit which detects that the document is in place for imaging based on a brightness level of the detecting light on the image taken by the imaging unit; and
a light emission control unit which controls the light emitting unit to turn off the detecting light once the document is detected.

2. The document reading device according to claim 1, wherein the wavelength of the detecting light is set to a wavelength to which the imaging unit is more sensitive than to the wavelength of the reading illumination.

3. The document reading device according to claim 1, wherein the document detecting unit detects that the document is in place based on a brightness level in a sub-range that corresponds to a location of the detecting light within an imaging area of the imaging unit.

4. The document reading device according to claim 3, wherein, when the document is to be detected, the imaging unit is controlled to take an image of a detected range that is a part of the entire imaging area and includes the sub-range.

5. A document detecting method comprising:
emitting detecting light for a document from a back of an information recorded surface of the document on which information that can be read through use of light of a predetermined reading wavelength is recorded, the detecting light being of a detecting wavelength different from the reading wavelength;
taking an image of the information recorded surface of the document by an imaging unit;
detecting that the document is in place based on a brightness level of the detecting light on the image taken by the imaging unit; and
turning off the detecting light once the document is detected.

6. The document detecting method according to claim 5, wherein the wavelength of the detecting light is set to a wavelength to which the imaging unit is more sensitive than to the wavelength of the reading illumination.

7. The document detecting method according to claim 5, wherein the document in place is detected based on a brightness level in a sub-range that corresponds to a location of the detecting light within an imaging area of the imaging unit.
